# EUROPÄISCHE PATENTANMELDUNG

(11) **EP 3 401 057 A1**
(43) Veröffentlichungstag der Anmeldung: **14.11.2018**
(21) Anmeldenummer: 17170843.1
(22) Anmeldetag: 12.05.2017
(51) Int. Cl.: B24B 33/08, B23F 21/03

(54) **HONWERKZEUG**

(71) Anmelder: Hermes Schleifmittel GmbH, 22547 Hamburg (DE)
(72) Erfinder: ZIMMERMANN, Jonathan, 45145 Essen (DE)
(74) Vertreter: Glawe, Delfs, Moll

(57) **Zusammenfassung**

Gegenstand der Erfindung ist ein Honwerkzeug zur Feinbearbeitung von Zahnrädern. Erfindungsgemäß ist vorgesehen, dass die Verzahnung (2) quer zur Erstreckungsrichtung der Zähne unterbrochen ist. Die erfindungsgemäße Gestaltung ermöglicht eine ruhige, vibrationsarme Bearbeitung mit einer besseren Kühlmediumzufuhr.

## Beschreibung

Die Erfindung betrifft ein Honwerkzeug, eine Maschine und ein Verfahren zur Feinbearbeitung von Zahnrädern (Verzahnungshonen).

Das Verzahnungshonen ist ein spanendes Feinbearbeitungsverfahren mit geometrisch unbestimmter Schneide, das bei der Feinbearbeitung von gehärteten Zahnrädern zur Anwendung kommt.

Beim Honen wälzen das Honwerkzeug und das zu bearbeitende Zahnrad aufeinander ab. Die Verzahnungen von Honwerkzeug und Zahnrad kämmen dabei unter einem Achskreuzwinkel, der zwischen den windschiefen Drehachsen von Honwerkzeug und Zahnrad eingestellt ist.

Zwischen den Zahnflanken des Honwerkzeugs und des zu bearbeitenden Zahnrads liegt eine gleitende Relativbewegung vor, die den Spanabtrag am Zahnrad bewirkt.

Honwerkzeug und Zahnrad oszillieren in Richtung der Drehachse des Zahnrads, um eine gleichmäßige Bearbeitung der Zahnflanken des Zahnrades über deren Breite zu erzielen. Der Materialabtrag wird dabei über die Zustellung in radialer Richtung eingestellt. Weist das zu honende Zahnrad eine Schrägverzahnung auf, so wird die oszillierende Bewegung als gewindeförmig ausgeführt, indem der axialen Bewegung des Zahnrads entlang seiner Drehachse eine Rotation um seine Drehachse überlagert wird.

Das Honwerkzeug besteht üblicherweise aus einer Kunstharz- oder Keramikbindung, in die Hartstoffschleifkörner eingebettet sind. Honwerkzeuge sind gebundene Schleifwerkzeuge und enthalten Schleifkorn und Bindemittel, welches sowohl organischer, als auch anorganischer Natur sein kann. Honringe sind meist porös ausgelegt, Poren bilden Spanraum und Räume für Kühlschmierstoffe und Späne.

Der Erfindung liegt die Aufgabe zu Grunde, ein Honwerkzeug zu schaffen, dass ein verbessertes Bearbeitungsergebnis und einen ruhigen, vibrationsarmen Lauf beim Honen ermöglicht.

Die Erfindung löst diese Aufgabe dadurch, dass die Verzahnung quer zur Erstreckungsrichtung der Zähne unterbrochen ist.

Zunächst seien einige im Rahmen der Erfindung verwendete Begriffe erläutert.

Der Begriff Honwerkzeug ist fachüblich im eingangs genannten Sinne zu verstehen. Ein Honwerkzeug dient dem Verzahnungshonen, es kann als Honwerkzeug für Innen- oder Außenverzahnungen ausgebildet sein.

Das Honwerkzeug weist eine Verzahnung auf, die mit der zu bearbeitenden Verzahnung des Zahnrades korrespondiert. Die Erstreckungsrichtung der Verzahnung bzw. der Zähne der Verzahnung ist die Hauptrichtung, ermittelt werden kann die Schrägungsrichtung und der Winkel auf Höhe des Teilkreisdurchmessers. Das Honwerkzeug kann sowohl eine Innen- als auch Außenverzahnung aufweisen.

Erfindungsgemäß weist die Verzahnung des Honwerkzeugs Unterbrechungen quer zur Erstreckungsrichtung der Verzahnung auf. Dies bedeutet, dass die Verzahnung auf einer Höhe zwischen Kopf und Fuß der Verzahnung unterbrochen oder durchbrochen ist, die Höhe der Durchbrechung muss sich nicht notwendigerweise bis zum Fußkreis erstrecken. Die Unterbrechung kann auch den Fußkreisdurchmesser bei einem innenverzahnten Honring überschreiten bzw. bei einem außenverzahnten Honrad unterschreiten.

Beim Verzahnungshonen wirken mehrere Kräfte. Die Spindeln von Honwerkzeug und Werkstück können jeweils einzeln oder auch gemeinsam angetrieben sein, entsprechend werden die Spindeln mit positiven bzw. negativen Drehmomenten beaufschlagt. Beim wechselseitigen Zahneingriff erfolgt nicht nur eine Verzögerung der Drehbewegung, sondern auch die Einwirkung einer Querkraft parallel zur Erstreckung der Antriebachsen, dies auch in Abhängigkeit des Vorschubes.

Die erfindungsgemäße Unterbrechung der Verzahnung hat überraschende positive Wirkungen auf das Bearbeitungsergebnis und auch das Bearbeitungsverfahren.

Die beim Honen im wechselseitigen Zahneingriff impulsartig auftretenden Kräfte bewirken sowohl eine Verwindung der maschinellen Aufspannung, als auch ein unerwünschtes Aufschwingen der Maschine. Dies erlaubt eine Erhöhung des Vorschubes und damit eine kürzere Bearbeitungszeit.

Ein erfindungsgemäß unterbrochener Zahn eines Honwerkzeugs bewirkt eine Verkürzung bzw. eine Unterbrechung des Impulses bei einer bestimmten, sich periodisch wiederholenden Wälzstellung. Dies trägt dazu bei, die oben beschriebenen Verwindungen und Schwingungen deutlich herabzusetzen. Anzahl und Breite der Quernuten können an die spezifischen maschinellen und operativen Gegebenheiten angepasst werden. Zudem sorgen die Unterbrechungen bzw. Nuten für eine bessere Kühlung in dem Bearbeitungsbereich. Das Kühlmedium gelangt (besser) in den Bearbeitungsbereich.

Beim Honen gelangt Schleifkorn in Eingriff mit dem Werkstück und es werden Späne abgenommen. Die Erfindung hat erkannt, dass die Porosität des Honwerkzeuges und der Einsatz von Kühlschmierstoffen keine vollständige Entfernung von Abtrag aus dem Bearbeitungsbereich ermöglichen.

Eine erfindungsgemäße Durchbrechung schafft zusätzlichen Spanraum, in der Konsequenz werden die Effizienz und das Ergebnis des Prozesses verbessert.

Erfindungsgemäß ist es möglich die Porosität zu Gunsten einer verbesserten Oberflächengüte (kleineres Schleifkorn) des Honringes zu verringern, jedoch trotzdem dem Abrieb die Möglichkeit zu geben aus der Bearbeitungszone zu gelangen..

Der Abrieb sammelt sich erfindungsgemäß überwiegend in den durch die Durchbrechungen gebildeten Quernuten (Spankammern) an und kann mittels Kühlmedium ausgespült werden.

Die verbesserte Reinheit in der Bearbeitungszone bzw. dem Bearbeitungsbereich bewirkt auch einen geringeren Verschleiß des Honringes und damit verlängerte Abrichtintervalle. Erfindungsgemäß ist vorzugsweise die Verzahnung durch wenigstens eine Nut (Quernut) unterbrochen. Solche Nuten können in der Herstellung bevorzugt spanend erzeugt werden, beispielsweise mittels einer Diamantschleifscheibe eingebracht werden. Es ist im Rahmen der Erfindung möglich und bevorzugt, dass eine Abfolge von Nuten in mehreren aufeinanderfolgenden Zähnen des Honwerkzeug miteinander fluchten, also auf einer gedachten Linie liegen, die sich beispielsweise in Umfangsrichtung erstrecken kann. Sie kann auch mit einem Winkel zur Umfangsrichtung oder in Gewindeform verlaufen.

Bevorzugt liegt die Erstreckungsrichtung der Nut in einem Winkel von 20 bis 90°, vorzugsweise 45 bis 90° zur Erstreckungsrichtung der Verzahnung.

Erfindungsgemäß kann wenigstens eine Nut in Umfangsrichtung des Honwerkzeugs verlaufen. Dies bedeutet, dass eine Abfolge von Nuten in aufeinanderfolgenden Zähnen entlang einer gedachten Umfangslinie angeordnet ist.

Jeder Zahn kann zwei oder mehr solche in Umfangsrichtung verlaufenden Nuten aufweisen, die entsprechenden gedachten Linien verlaufen dann parallel zueinander in Umfangsrichtung in einem axialen Abstand voneinander.

Erfindungsgemäß kann der Durchmesser der wenigstens einen Nut größer oder gleich dem Fußkreisdurchmesser der Verzahnung sein. Anders ausgedrückt ist dann die Nuttiefe größer oder gleich der Verzahnungshöhe. Dies trägt insbesondere dazu bei, ausreichenden Spanraum zu schaffen. Wenn die Nuttiefe größer der Verzahnungshöhe ist, ist selbst nach dem Abrichten (Nachsetzen) die Nut noch vorhanden.

Es ist erfindungsgemäß ebenfalls möglich, dass die Nuttiefe kleiner als die Verzahnungshöhe bzw. Zahnhöhe ist, vorzugsweise 20 bis 90%, weiter vorzugsweise 30 bis 80% der Verzahnungshöhe entspricht.

Bevorzugt kann die Breite der Unterbrechungen oder Nuten in Erstreckungsrichtung der Verzahnung 0,2 bis 2 mm betragen (bevorzugt gemessen auf Höhe des Kopfkreises der Verzahnung). Ein bevorzugter Bereich ist 0,5-1,5 mm.

Der Abstand der Unterbrechungen oder Nuten in Erstreckungsrichtung der Verzahnung beträgt bevorzugt 4 bis 20 mm, weiter vorzugsweise 6 bis 10 mm. Diese Abstände erlauben einerseits einen zufriedenstellenden ruhigen Maschinenlauf, andererseits bewirken sie eine hinreichende Bearbeitungsfläche bei gutem Materialabtrag.

Ein weiterer Gegenstand der Erfindung ist eine Maschine zur Feinbearbeitung von Zahnrädern unter Verwendung eines erfindungsgemäßen Honwerkzeugs, die eine Einrichtung zum Ausbringen von Kühlmedium aufweist, die zum Spülen der Unterbrechungen oder Nuten mit Kühlmedium ausgebildet ist.

Eine Ausbildung zum Spülen der Unterbrechungen bedeutet, dass Austrittsöffnungen bzw. Düsen für das Kühlmedium so angeordnet sind, dass ein Strom des Kühlmediums auf den Raum der Unterbrechungen gerichtet wird und dazu beitragen kann, Materialabtrag und Späne daraus zu entfernen. Die erfindungsgemäße Maschine weist dem Kühlmedium somit eine Doppelfunktion zu, neben dem üblichen Kühlen dient es auch zum Austrag der Späne.

Als Kühlmedium werden bei der erfindungsgemäßen Maschine bevorzugt übliche Kühlschmierstoffe verwendet.

Ein weiterer Gegenstand der Erfindung ist ein Verfahren zur Feinbearbeitung von Zahnrädern mittels Honen, dadurch gekennzeichnet, dass das Honen unter Verwendung eines erfindungsgemäßen Honwerkzeugs erfolgt.

Dabei erfolgt bevorzugt ein Kühlen der Bearbeitungsflächen des Honwerkzeugs mittels Kühlmedium, bevorzugt Kühlschmierstoff. Bevorzugt wird dass das Kühlmedium zusätzlich zum Ausspülen der Nuten verwendet.

Ausführungsbeispiele der Erfindung werden nachfolgend beschrieben. In der Zeichnung zeigen:
Fig. 1 - 3: Eine erste Ausführungsform eines erfindungsgemäßen Honwerkzeugs,
Fig. 4 - 6: Eine zweite Ausführungsform der Erfindung,
Fig. 7 - 10: Eine dritte Ausführungsform der Erfindung.

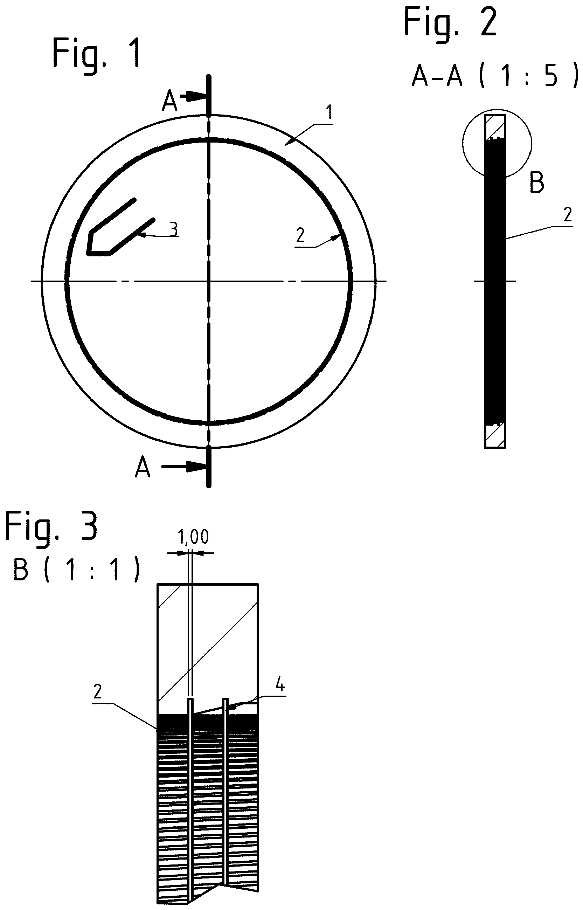

Figur 1 zeigt einen Honring 1 mit einer Innenverzahnung 2, der zur Feinbearbeitung eines entsprechenden (nicht dargestellten) Zahnrades mit einer Außenverzahnung dient. Mit der Ziffer 3 ist eine Düse für Kühlmedium, insbesondere Kühlschmierstoff, angedeutet.

Figur 2 zeigt einen Schnitt entlang der Linie B-B der Figur 1, Figur 3 einen Ausschnitt C aus der Figur 2. man erkennt, dass die Schrägverzahnung 2 in Umfangsrichtung unterbrochen ist durch zwei parallel zueinander angeordnete Nuten 4, die im Ausführungsbeispiel eine axiale Breite von 1 mm und einen axialen Abstand voneinander von 8 mm aufweisen. Der Durchmesser und damit die Tiefe der Nuten 4 sind im Ausführungsbeispiel etwas größer als der Fußkreisdurchmesser der Verzahnung.. Die Nutentiefe ist somit mindestens gleich groß wie die Verzahnungshöhe.

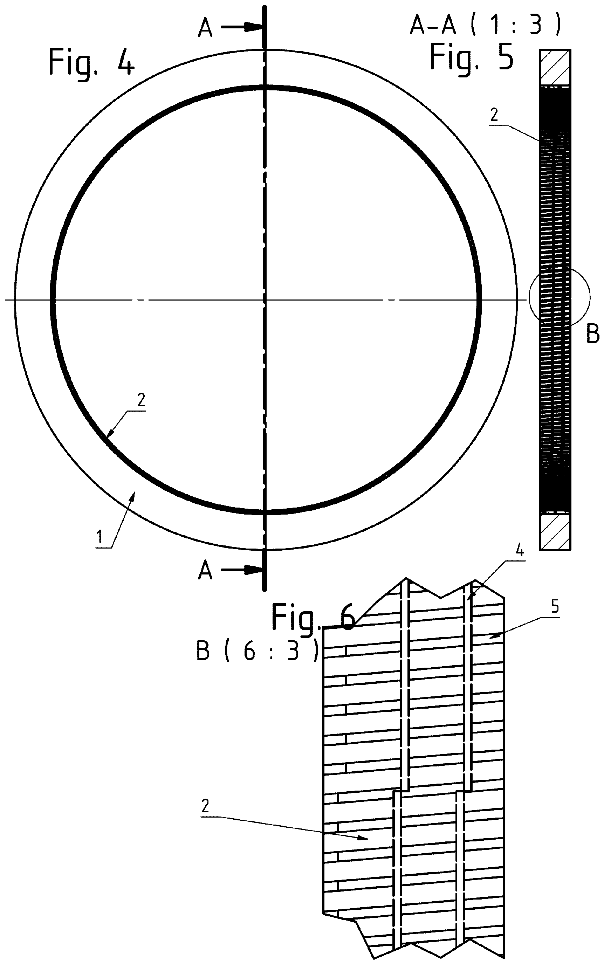

Die Figuren 4-6 zeigen ein zweites Ausführungsbeispiel der Erfindung, bei dem die in Umfangsrichtung verlaufenden zueinander parallelen Nuten 4 über verschiedene Umfangsabschnitte axial zueinander versetzt sind, wie in Figur 5 und insbesondere Figur 6 zu erkennen. Die Bezugsziffer 5 bezeichnet hier einen Zahnkopf.

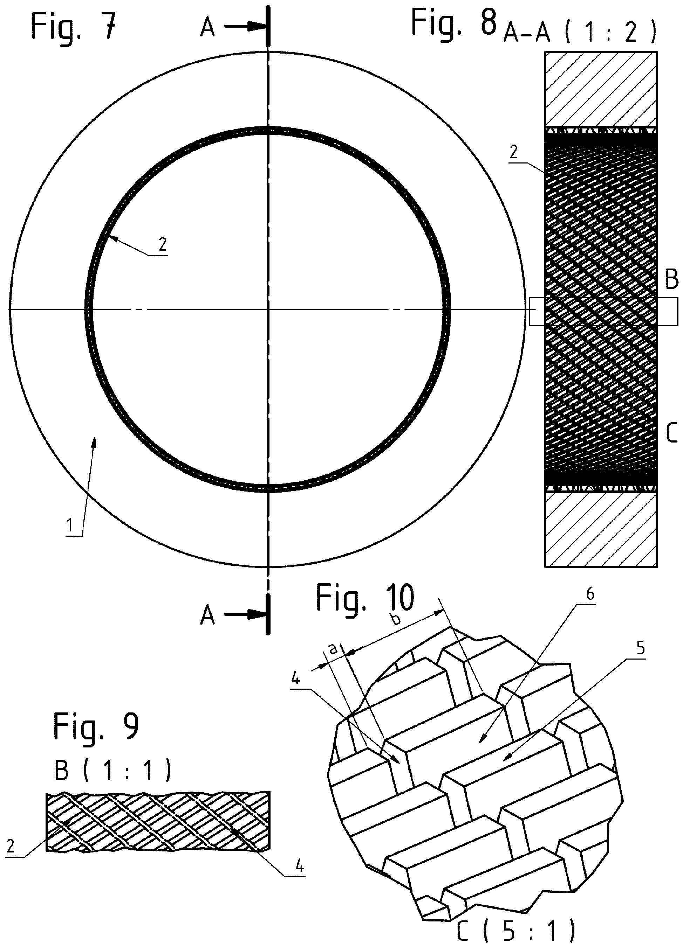

Die Figuren 7-10 zeigen ein drittes Ausführungsbeispiel der Erfindung. Wie in Figur 8 zu erkennen, verläuft die Schrägverzahnung 2 hier in einem deutlich größeren Winkel zur Axialrichtung als in den beiden Ausführungsbeispielen zuvor. Die erfindungsgemäß vorgesehenen Nuten 4 sind in diesem Ausführungsbeispiel nicht in Umfangsrichtung, sondern ebenfalls in einem Winkel dazu angeordnet. Figur 9 zeigt in einem Ausschnitt H aus Figur 8 die Verzahnung 2 und die darin angeordneten Nuten 4. Der hier gezeigte Winkel zwischen Verzahnung und Nuten ist lediglich beispielhaft, er kann im Rahmen der vorstehend genannten Bereiche variiert werden.

Figur 10 zeigt in einem Ausschnitt E aus Figur 8 in einer 3-D-Darstellung die Verzahnung mit den Zahnflanken 6 und den Zahnköpfen 5. Die Nuten 4 weisen in dieser Ausführungsform eine Breite a von 1 mm und einen Abstand b in Erstreckungsrichtung der Zähne von 8 mm auf.

### Herstellungsbeispiel

17,798 kg keramisches Bindemittel und 30,613 kg Sinterkorund werden in einem Mischer des Types Bear, RN 10/VK2 auf Stufe 5 über einen Zeitraum von 37,5 min zusammen mit 1,44 kg flüssigem Phenolharz gemischt. Das keramische Bindemittel besteht aus den Komponenten Glasfritte, Feldspat und Ton. Das Phenolharz dient als temporärer Binder. Das Gemisch wird in eine Form gegeben und hydraulisch mit einem spezifischen Pressdruck von 20 MPa gepresst. Der gepresste Rohling wird anschließend bei einer maximalen Temperatur von 175°C ausgehärtet. Der anschließende keramische Brand erfolgt über einen Zeitraum von 6 Tagen. Die maximale Temperatur von 1250°C wird während des Brandes 10 h gehalten. Der Honring-Rohling wird danach spanend bearbeitet. Die zulässigen Toleranzen betragen dabei +/- 0,1 mm bei den Honring-Abmaßen bzw. +/- 0,005 mm bei der Verzahnung.

Der so hergestellte, innenverzahnte, keramisch gebundene Honring weist folgende Maße auf:
Außendurchmesser: 400 mm
Innendurchmesser: 337 mm
Breite: 24 mm
Verzahnungslänge: 24 mm
Zahnhöhe: 3 mm radial
Nutenbreite: 1,0 mm
Nutentiefe: 4 mm
Abstand der Nutmitte von der Planfläche: 8,0 mmm
Abstand zwischen Nutmitte zu Nutmitte: 8,0 mm

Die Nut erstreckt sich senkrecht zur Zahnlängsachse, der Winkel zwischen Mittelachse und Erstreckungsrichtung der Zähnebeträgt 4,9 Grad.

### Honversuche

Ein erfindungsgemäß hergestellter Honring wurde zur Bearbeitung eines Zahnrades (Werkstück) verwendet. Der Versuch wurde auf einer Verzahnungshonmaschine vom Typ Fässler HMX 400 durchgeführt. Werkstück: Zahnrad, Material Legierung 24 Mn Cr4. Angaben zu Honring, Werkstück und Bearbeitungsparametern finden sich in der nachfolgenden Tabelle:

| **Honring** | | | | **Werkstück** | |
|---|---|---|---|---|---|
| Normalmodul | mn | 1,25 | | mn | 1,25 |
| Zähnezahl | Z | 271 | | Z | 108 |
| Eingriffswinkel | a | 20 | | Alpha | 20 |
| Schrägungswinkel | b | 4,935 | | b | 13 |
| Zahnrichtung | | rechts | | | |
| Außendurchmesser | d | 400 | | d | |
| Kopfkreisdurchmesser | da | 337,005 | | da | 141,83 |
| Fußkreisdurchmesser | df | 342,9 | | df | 135,816 |
| Teilkreisdurchmesser | do | 340,010442 | | do | |
| Grundkreisdurchmesser | db | 319,366068 | | db | |
| Profilvers.-Faktor | x | 0,418 | | Mdk (DM=2,5) | 143,348 |
| Endzustand | dn | 350,2 | | DM = 2,5 | |
| Honringbreite | b | 24 | | b | 21,1 |
| Achskreuzwinkel | h | 8 | | h | |

Als Vergleichsbeispiel wurde ein Honring mit identischen Parametern, jedoch ohne die erfindungsgemäßen Nuten verwendet. Die Versuchsparameter und Versuchsergebnisse sind in der nachfolgenden Tabelle zusammengestellt:

| | Vergl 1 | Erf 1 | Vergl 2 | Erf 2 | Vergl 3 | Erf 3 |
|---|---|---|---|---|---|---|
| **Vorschub [mm/min]** | 110 | 110 | 200 | 200 | 200 | 200 |
| **Zustellung [mm]** | 0,005 | 0,005 | 0,005 | 0,005 | 0,005 | 0,005 |
| **Drehzahl Werkstück [min⁻¹]** | 1800 | 1800 | 3000 | 3000 | 3000 | 3000 |
| **Drehzahl Werkzeug [min-1]** | 717 | 717 | 1196 | 1196 | 1196 | 1196 |
| **Oszillationsweg [mm]** | | | | | | |
| **+** | 0,8 | 0,8 | 2 | 2 | 0,8 | 0,8 |
| **-** | 0,8 | 0,8 | 2 | 2 | 0,8 | 0,8 |
| **Spindelkraft [N]** | **300** | **300** | **270** | **<150** | **900** | **<150** |
| **Vibrationen spürbar** | kaum | kaum | deutlich | Kaum | deutlich | kaum |
| **nass/trocken** | nass | nass | nass | nass | trocken | trocken |

Die Versuche Erf 1 bis Erf 3 wurden mit dem erfindungsgemäßen Honring durchgeführt, die Versuche Vergl 1 bis 3 mit dem genannten Vergleichsbeispiel ohne die erfindungsgemäßen Nuten.

Das erfindungsgemäße Honwerkzeug ermöglicht eine ruhige, vibrationsarme Bearbeitung und senkt damit die Belastungen in der Maschine. Die in den Nuten angesammelten Späne lassen sich durch Kühlmedium ausspülen. Die Erfindung ermöglicht die Bearbeitung mit deutlich verminderter Krafteinwirkung in x-Richtung (Spindelkraft) der verwendeten Maschine.

## Patentansprüche

1. Honwerkzeug zur Feinbearbeitung von Zahnrädern, **dadurch gekennzeichnet, dass** die Verzahnung (2) quer zur Erstreckungsrichtung der Zähne unterbrochen ist.

2. Honwerkzeug nach Anspruch 1, **dadurch gekennzeichnet, dass** die Verzahnung (2) durch wenigstens eine Nut (4) unterbrochen ist.

3. Honwerkzeug nach Anspruch 2, **dadurch gekennzeichnet, dass** die Erstreckungsrichtung der Nut (4) in einem Winkel von 20 bis 90°, vorzugsweise 45 bis 90° zur Erstreckungsrichtung der Verzahnung (2) liegt.

4. Honwerkzeug nach Anspruch 2 oder 3, **dadurch gekennzeichnet, dass** die wenigstens eine Nut (4) in Umfangsrichtung des Honwerkzeugs verläuft.

5. Honwerkzeug nach einem der Ansprüche 2 bis 4, **dadurch gekennzeichnet, dass** der Durchmesser der wenigstens einen Nut (4) größer oder gleich dem Fußkreisdurchmesser der Verzahnung (2) ist.

6. Honwerkzeug nach einem der Ansprüche 2 bis 5, **dadurch gekennzeichnet, dass** die Nutentiefe größer oder gleich der Verzahnungshöhe ist.

7. Honwerkzeug nach einem der Ansprüche 2 bis 5, **dadurch gekennzeichnet, dass** die Nuttiefe kleiner als die Verzahnungshöhe ist, vorzugsweise 20 bis 90%, weiter vorzugsweise 30 bis 80% der Verzahnungshöhe entspricht.

8. Honwerkzeug nach einem der Ansprüche 1 bis 7, **dadurch gekennzeichnet, dass** die Breite der Unterbrechungen oder Nuten (4) in Erstreckungsrichtung der Verzahnung (2) 0,2 bis 2 mm beträgt.

9. Honwerkzeug nach einem der Ansprüche 1 bis 8, **dadurch gekennzeichnet, dass** der Abstand der Unterbrechungen oder Nuten (4) in Erstreckungsrichtung der Verzahnung (2) 4 bis 20 mm, vorzugsweise 6 bis 10 mm beträgt.

10. Maschine zur Feinbearbeitung von Zahnrädern unter Verwendung eines Honwerkzeugs nach einem der Ansprüche 1 bis 9, **dadurch gekennzeichnet, dass** sie eine Einrichtung (3) zum Ausbringen von Kühlmedium aufweist, die zum Spülen der Unterbrechungen oder Nuten (4) mit Kühlmedium ausgebildet ist.

11. Maschine nach Anspruch 10, **dadurch gekennzeichnet, dass** die Einrichtung (3) zum Ausbringen von Kühlmedium zum Ausbringen von Kühlschmierstoffen ausgebildet ist.

12. Verfahren zur Feinbearbeitung von Zahnrädern mittels Honen, **dadurch gekennzeichnet, dass** das Honen unter Verwendung eines Honwerkzeugs nach einem der Ansprüche 1 bis 9 erfolgt.

13. Verfahren nach Anspruch 12, **dadurch gekennzeichnet, dass** ein Kühlen der Bearbeitungsflächen des Honwerkzeugs mittels Kühlmedium erfolgt.

14. Verfahren nach Anspruch 13, **dadurch gekennzeichnet, dass** das Kühlmedium zusätzlich zum Ausspülen der Nuten verwendet wird.
